(19)

Europäisches
Patentamt
European
Patent Office
Office européen
des brevets

(11)  **EP 1 742 194 A1**

(12)  # EUROPEAN PATENT APPLICATION

(43) Date of publication:
**10.01.2007 Bulletin 2007/02**

(51) Int Cl.:
***G09G 3/34*** *(2006.01)*

(21) Application number: **05254196.8**

(22) Date of filing: **04.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Tam, Simon**<br>**c/o Cambridge Research Lab. of Epson**<br>**Cambridge CB4 0FE (GB)** |
| | (74) Representative: **Cloughley, Peter Andrew et al**<br>**Miller Sturt Kenyon,**<br>**9 John Street**<br>**London WC1N 2ES (GB)** |
| (71) Applicant: **SEIKO EPSON CORPORATION**<br>**Shinjuku-ku,**<br>**Tokyo 163-0811 (JP)** | |

(54)  **Electro-optical display and method of operation**

(57)    An electro-optical arrangement includes an electro-optical device, which can take either a first display state or a second display state, and a driving stage which provides first and second electrode-drive signals to drive the first and second electrodes of the device. The driving stage in an initial clearing operation outputs a voltage across the electrodes, which places the device into its second display state corresponding to a second coloration of the device. Subsequently the driver stage applies voltages to the electrodes, such that the device assumes either the first display state (a first coloration) or the second display state. This is a writing phase. In either state it is arranged for the device not to be subjected to more than a safe operating voltage across its electrodes. Preferably the device is an electrophoretic device and, in one of its two display states, one of its electrodes is supplied with a voltage which is higher than the voltage (Vcom) on the other electrode, while in the other of its two display states the one electrode is supplied with a voltage which is lower than the voltage (Vcom) on the other electrode. A greyscale driving scheme is also envisaged.

Fig. 7(a)

**Description**

The present invention relates to an electro-optical arrangement and to an electro-optical arrangement which includes an electrophoretic device. The invention in a second aspect thereof also relates to a method of driving an electro-optical device, in particular an electrophoretic device.

Electrophoretic effects are well known among scientists and engineers, wherein charged particles dispersed in a fluid or liquid medium move under the influence of an electric field. As an example of the application of the electrophoretic effects, engineers try to realize displays by using charged pigment particles that are dispersed and contained in dyed solution arranged between a pair of electrodes, which is disclosed by Japanese Patent No. 900963, for example. Under the influence of an electric field, the charged pigment particles are attracted to one of the electrodes, so that desired images will be displayed. The dyed solution in which charged pigment particles are dispersed is called electrophoretic ink, and the display using the electrophoretic ink is called an electrophoretic display (abbreviated as "EPD").

Each of the charged pigment particles has a nucleus that corresponds to a rutile structure such as $TiO_2$, for example. The nucleus is covered by a coating layer made of polyethylene, for example. As solvents, it is possible to use a solution dissolving ethylene tetrachloride, isoparaffin, and anthraquinone dye, for example. The charged pigment particles and the solvents each have different colors. For example, the charged pigment particles are white, while the solvents are blue, red, green, or black, for example. At least one of the electrodes is formed as a transparent electrode.

Applying an electric field to the electrophoretic ink externally, if the pigment particles are negatively charged, they move in a direction opposite to a direction of the electric field. Thus, the display produces a visual representation such that one surface of the display being observed through the electrophoretic ink seems to be colored in either the color of the solvent or the color of the charged pigment particles. By controlling the movement of the charged pigment particles in each pixel, it is possible to represent visual information on the display surface of the display.

The solvent and the charged pigment particles both have approximately the same specific gravity. For this reason, even if the electric field disappears, the charged pigment particles can maintain their positions, which are fixed by the application of the electric field, for a relatively long time, which may range from several minutes to twenty minutes, for example, or even more. Because of the aforementioned property of the charged pigment particles of the electrophoretic ink, it is possible to anticipate low power consumption by the electrophoretic display. In addition, the electrophoretic display is advantageous because of the high contrast and very large viewing angle, which reaches approximately $\pm 90$ degrees. Generally speaking, a human observer is inevitably required to directly view colors of pigments and/or colors of dyes in the electrophoretic display. Whereas the liquid crystal display of the transmission type requires the human observer to view light from fluorescent tubes of the back light, the electrophoretic display can produce visually subtle colors and shades, which are gentle on the human eyes. In addition, the electrophoretic ink is inexpensive compared to liquid crystal. Furthermore, the electrophoretic display does not need a back light. Therefore, it is anticipated that electrophoretic displays can be manufactured at the relatively low cost.

In spite of the aforementioned advantages, manufacturers could not actually produce electrophoretic displays for practical use because of low reliability in operation due to cohesion of charged pigment particles. However, recent advances in technology have shown that reliability can be improved by using microcapsules filled with electrophoretic ink. Therefore, electrophoretic displays have recently suddenly become a focus of interest.

Various papers and monographs have been written detailing concrete examples of displays using electrophoretic ink encapsulated in microcapsules. Two such papers are, firstly, a paper entitled "44.3L: A Printed and Rollable Bistable Electronic Display" by P. Drzaic et al for the SID 98 DIGEST 1131 and, secondly, a paper entitled "53.3: Microencapsulated Electrophoretic Rewritable Sheet" by H. Kawai et al for the SID 99 DIGEST 1102.

The aforementioned first paper describes how four types of layers are sequentially printed on a polyester film, that is, a transparent conductive plate, an encapsulated electrophoretic ink layer, a patterned conductive layer of silver or graphite, and an insulation film layer. In short, the first paper proposes a "flexible" display in which a hole (or holes) is open on the insulating film to allow designation of an address (or addresses) for the patterned conductive layer and to allow a lead line (or lead lines) to be provided. The second paper proposes a rewritable sheet that operates on the basis of electrophoresis using the microencapsulated electrophoretic ink, and it also proposes a method for writing information onto the sheet. In addition, it is possible to propose a display in which a surface of an active-matrix type array of elements such as the low-temperature processed polysilicon thin-film transistors (TFT) is coated with the electrophoretic ink. Thus, it is possible to provide the "visually subtle and gentle" display that also benefits from a reduction in the consumption of electricity.

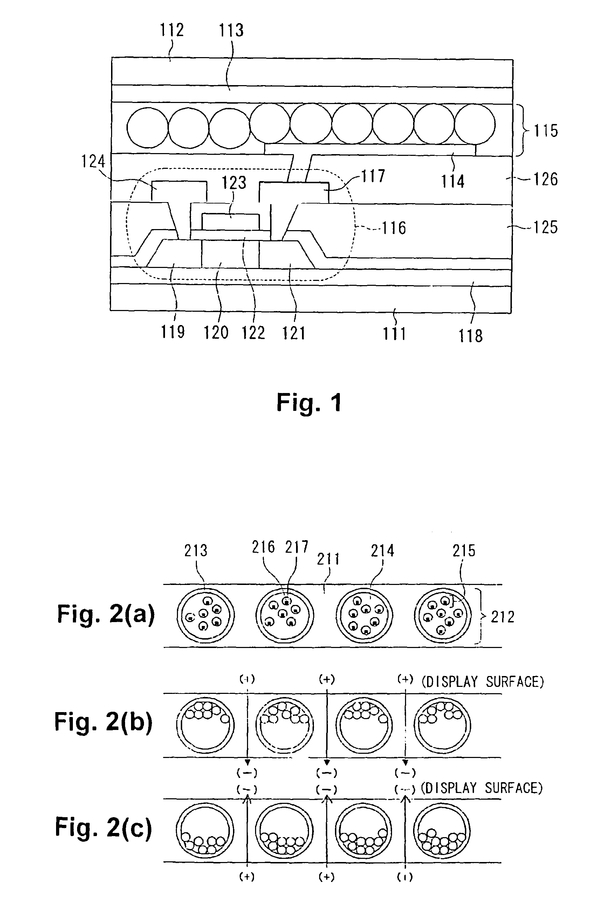

US patent application 2002/003372, having the present applicants as assignee, describes the structure of a selected section of an electrophoretic display with respect to each pixel. This structure, which is reproduced here as Fig. 1, features two substrates 111 and 112, which are fixed by bonding and are arranged opposite to each other. A common electrode 113 is formed just below the substrate 112, under which a pixel electrode 114 is formed. An electrophoretic ink layer 115 containing plenty of microcapsules of electrophoretic ink is formed between the common electrode 113 and the pixel electrode 114. The pixel electrode 114 is connected to a drain electrode 117 of a thin-film transistor (TFT) 116 in series. The TFT 116 plays a role as a switch. At least one of the common electrode 113 and pixel electrode 114 is made by a transparent electrode, which corresponds to a display surface to be visually observed by a person or human operator.

The TFT 116 contains a source layer 119, a channel 120, a drain layer 121, and a gate insulation film 122 that are formed on an embedded insulation film 118. In addition, it also contains a gate electrode 123 formed on the gate insulation film 122, a source electrode 124 formed on the source layer 119, and a drain electrode 117 formed on the drain layer 121. Further, the TFT 116 is covered with an insulation film 125 and another insulation film 126 respectively.

Next, the internal structure and operation of the electrophoretic ink layer 115 will be described with reference to Figs. 2(a)-2(c), which are likewise derived from US 2002/0033792. The electrophoretic ink layer 115 is formed by a transparent binder 211 having light transmittance and plenty of microcapsules 212. The microcapsules 212 are distributed uniformly in the inside of the binder 211 in a fixed state. The thickness of the electrophoretic ink layer 115 is 1.5 to 2 times as large as external diameters of the microcapsules 212. As the material for the binder 211, it is possible to use silicone resin and the like. Each microcapsule 212 is defined by a capsule body 213 that has a hollow spherical shape and transmits light. The inside of the capsule body 213 is filled with liquid (or solvent) 214, in which negatively charged particles 215 are dispersed. Each of the charged particles 215 has a nucleus 216 that is coated with a coating layer 217. Each charged particle 215 and the liquid 214 mutually differ from each other in color. That is, different colors are set to them respectively. For example, the charged particles 215 are white, while the liquid 214 is blue, red, green or black. Additionally, approximately the same specific gravity is set for both of the liquid 214 and charged particles 215 within the microcapsule 212.

When an electric field is applied to the microcapsules 212 externally, the charged particles 215 move within the microcapsules 212 in directions opposite to the direction of the electric field. If the display surface of the display presently corresponds to an upper surface of the substrate 112 shown in Fig. 1, the charged particles 215 move upwards within the microcapsules 212 of the electrophoretic ink layer 115, which is shown in Fig. 2(b). In that case, it is possible to observe the color (i.e., white) of the charged particles 215 that are floating upwards above the background color, which corresponds to the color (e.g., blue, red, green, or black) of the liquid 214. In contrast, if the charged particles 215 move downwards due to the application of an electric field to the microcapsules 212 of the electrophoretic ink layer 115 shown in FIG. 1, the display allows only the color (e.g., blue, red, green, or black) of the liquid 214 to be observed, which is shown in Fig. 2(c). Once the charged particles 215 are moved in directions opposite to the direction of the electric field applied to the microcapsules 212, they will likely maintain the same positions within the microcapsules 212 for a relatively long time after the electric field disappears because they have approximately the same specific gravity as that of the liquid 214. That is, once the color of the charged particles 215 or the color of the liquid 214 appears on the display surface, it is maintained for several minutes or several tens of minutes or even longer. In short, the electrophoretic display has a memory for retaining colors of images. Therefore, by controlling the application of an electric field with respect to each of the pixels, it is possible to provide specific electric-field application patterns, by which information is to be displayed. Once the information is displayed on the display surface of the electrophoretic display, it is maintained on the display surface for a relatively long time.

In recent years, thin-film transistors (TFTs) using an organic material behaving as a semiconductor in electrical conduction (organic semiconductor material) have been developed. TFTs of this type have an advantage that a semiconductor layer can be produced by a process using a solution without needing a high-temperature process or a high-vacuum process. The TFTs of this type are also advantageous in that they can be made thin and light, have good flexibility and incur low costs in terms of materials. Because of these advantages, they have been proposed for use as switching devices in a flexible display or the like, including electrophoretic displays.

It has been proposed to produce a TFT using organic materials for its gate electrode, gate insulating layer, source electrode, drain electrode, organic semiconductor layer, and alignment layer. An example of an organic TFT is found in, for example, 2000 International Electron Device Meeting Technical Digest, pp 623-626. This thin-film transistor can produced by the following production process.

First, a partition wall, which in a next step will be converted into an alignment layer, is formed on a substrate such that an area in which to form a source and an area in which to form a drain are surrounded by the partition wall, and a source electrode and a drain electrode are formed in the respective areas surrounded by the partition wall. The partition wall is then rubbed in a direction parallel to a channel direction thereby converting the partition wall into an alignment layer.

Thereafter, an organic semiconductor material is coated on the alignment layer and the organic semiconductor material is heated to a temperate at which the organic semiconductor material changes into a liquid crystal phase. Thereafter, the organic semiconductor material is cooled rapidly. As a result, an organic semiconductor layer aligned in a direction along the channel length is obtained. Thereafter, a gate insulating film is formed on the organic semiconductor layer, and a gate electrode is formed on the gate insulating film.

One of physical characteristics that determine the performance of the TFT is the carrier mobility of the semiconductor layer. The operating speed of the TFT increases with increasing carrier mobility of the semiconductor layer.

However, the carrier mobility of the organic semiconductor layer is generally two or more orders of magnitude lower than that of semiconductor layers formed from an inorganic material such as silicon, and thus it is very difficult to realize a TFT using an organic semiconductor layer having high performance and operable with a small driving voltage.

To improve the carrier mobility, investigations on many types of organic materials for organic semiconductor layers have been carried out. The carrier mobility is a function of the gate voltage applied to the semiconductor layer via the gate electrode, and also of the relative dielectric constant and the thickness of the gate insulating layer. Thus, it is also important to select a proper material for the gate insulating layer and a proper process of producing the gate insulating layer. In this regard, it has been proposed to dispose an alignment layer such as that described above to align the organic semiconductor layer in a particular direction.

However, the optimum layer structure has not been sufficiently well investigated, and consequently there is room for improvement in the layer structure. For example, in a case in which, after an alignment layer and an organic semiconductor layer have been formed, a gate insulating layer and a gate electrode are formed on the organic semiconductor layer, there is a restriction that the gate insulating layer and the gate electrode must be formed in a manner that does not cause degradation in the characteristics of the organic semiconductor layer. In other words, when the organic semiconductor layer is formed, if the organic semiconductor material is exposed to a temperature higher than a temperature at which the organic semiconductor layer changes into a liquid crystal phase, the organic semiconductor layer is brought into a randomly aligned state, and, as a result, a great reduction in carrier mobility occurs. Furthermore, if the organic semiconductor layer is exposed to a temperature higher than the aforementioned temperature, it loses its semiconductor properties. Another problem with the organic semiconductor layer is that it is easily damaged by an etchant such as sulfuric acid, that is used in the photolithography process.

For the above-described reasons, high-temperature film deposition techniques such as plasma CVD or sputtering and photolithography process cannot be used to form the gate insulating film and gate electrode. Indeed, any material that needs a similar micro fabrication technique is out of the question. Consequently, when a TFT is formed using an organic semiconductor layer, a sufficiently high carrier mobility of the organic semiconductor layer is not achieved, and therefore a high driving voltage is required, but the operating speed is still low.

An electrophoretic display, to which the present invention may be applied, may be driven by any of three well-known methods, namely direct driving, passive matrix driving and active matrix driving.

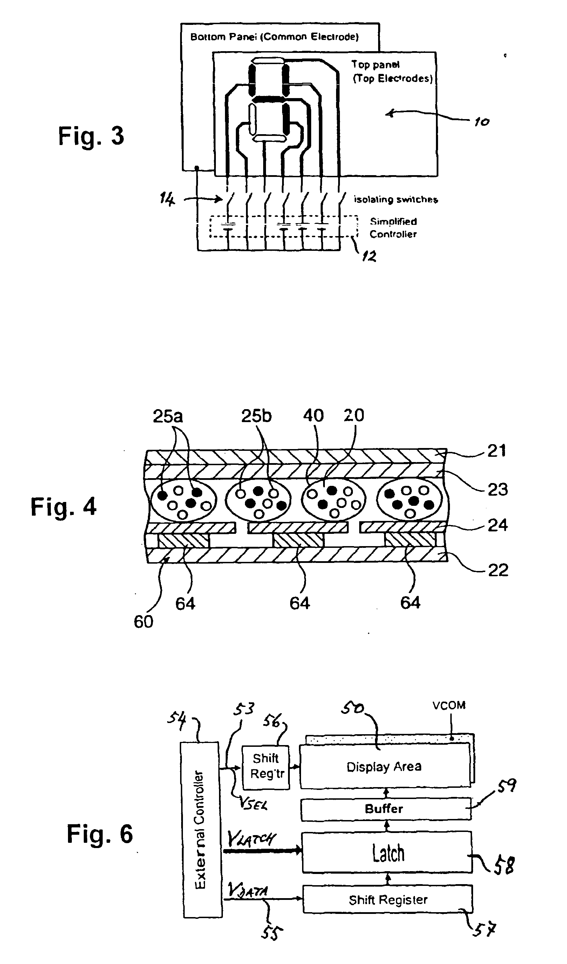

An example of direct driving is shown in Fig. 3, in which the segments of a seven-segment display 10 are driven directly by dedicated drivers in a controller stage 12. To briefly describe the driving procedure, first of all the display is placed in a "cleared" state by applying to the top electrodes a voltage of one polarity relative to a common bottom electrode. The display segments will then all display the same color, which may, depending on the polarity, be that of the microcapsules (e.g. white). Then, a voltage of the opposite polarity is applied by the controller to those electrodes that are required to be activated, whereby those electrodes assume the other color, i.e. that of the solvent in this example, which may be, e.g., blue. The controller can then be separated from the display through isolating switches 14. This scheme is simple to design and can be driven by a controller constructed with discrete components or peripheral electronics. However, because the number of interconnections increases with the number of electrodes, this driving method is inefficient and is not suitable for the display of high-resolution images.

As regards passive matrix driving, such a driving technique is described in the paper "14-1: Passive Matrix Addressing of Electrophoretic Image Display" by T. Bert, et al., Eurodisplay 2002, pp 251-254. This technique involves the use of a complex addressing waveform consisting of DC and AC components. The pixels of the display are subjected to three driving phases, which are: (1) a preparation phase, (2) a selection phase, and (3) a resting phase. During the preparation phase the pixel sees a high positive DC voltage and a high AC voltage superimposed on the DC voltage, so that the pixel is cleared (shows white). During the selection phase the pixel sees a small negative DC voltage and an AC component. If the AC component is small, then nothing is changed - that is, the pixel continues to show white. However, if the AC component is large, the pixel is switched to blue, for example. During the resting phase the pixel sees a modest AC signal without any DC component. As a result no change occurs in the displayed color.

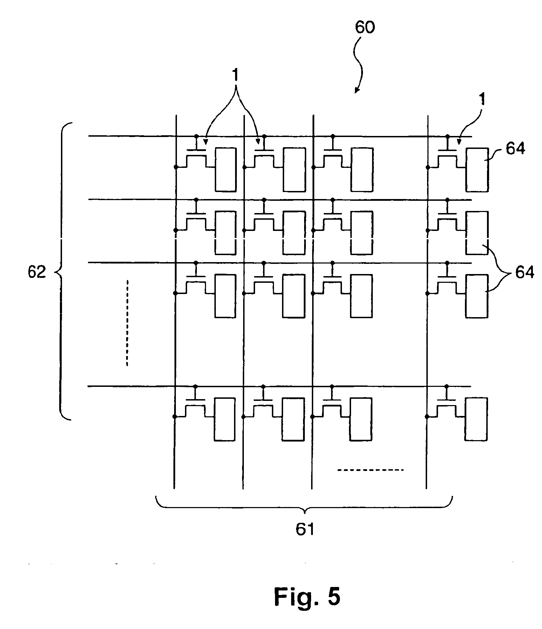

An exemplary TFT-based active-matrix driving scheme for an electrophoretic display is disclosed in US 2005/0029514, assigned to the present applicants, and is shown as Figs 4 and 5 in the present application. Fig. 4 is a longitudinal sectional view showing a display embodied in the form of an electrophoretic display, while Fig. 5 is an exemplary block diagram of an active matrix device disposed in the electrophoretic display shown in Fig. 4.

The electrophoretic display shown in Fig. 4 includes the active matrix device 60 disposed on a second substrate 22. The electrophoretic display 20 further includes a second electrode 24, a microcapsule 40, a first electrode 23 transparent to light, and a first substrate 21 transparent to light, wherein these are formed one on top of another on the active matrix device 60. The second electrode 24 is divided vertically and horizontally at regular intervals into the form of a matrix array. Each element of the array of the second electrode 24 is in contact with a corresponding one of operating electrodes 64 disposed on the active matrix device 60. The operating electrodes 64 are formed by patterning such that the respective operating electrodes 64 are disposed at the same intervals as those at which the respective elements of the second electrode 24 are disposed, and such that the respective operating electrodes 64 are disposed at locations corresponding to the locations of the corresponding elements of the second electrode 24.

As shown in Fig. 5, the active matrix device 60 includes a plurality of data lines 61 and a plurality of scanning lines 62 crossing the data lines 61 at right angles. A TFT (serving as a switching device) 1 and an operating electrode 64 are disposed near each intersection of the data lines 61 and scanning lines 62. The gate electrodes of the TFTs 1 are connected to corresponding ones of the scanning lines 62, the source/drain electrodes are connected to corresponding ones of the data lines 61, and the drain/source electrodes are connected to corresponding ones of the operating electrodes 64.

In each capsule 40, two or more different types of electrophoretic particles are encapsulated. Each type of electrophoretic particles is different in characteristics from the other types of electrophoretic particles. In the embodiment, a liquid dispersion of electrophoretic particles 20 including two types of electrophoretic particles 25a and 25b different in charge and color (hue) is encapsulated in each capsule 40.

In this electrophoretic display, if a selection signal (selection voltage) is applied to one or more scanning lines 62, TFTs 1 connected to the one or more scanning lines 62 to which the selection signal (selection voltage) is applied are turned on. As a result, a data line 61 and an operating electrode 64 connected to each one of those turned-on TFTs 1 are effectively connected with each other. In this state, if a particular data (voltage) is supplied to the data line 61, the data (voltage) is supplied to the second electrode 24 via the operating. electrode 64. As a result, an electric field appears between the first electrode 23 and the second electrode 24, and the electrophoretic particles 25a and 25b are electrophoretically moved toward one of the electrodes 23 and 24 depending on the direction and the strength of the electric field and also depending on the characteristics of the electrophoretic particles 25a and 25b. In this state, if the supply of the selection signal (selection voltage) to the scanning line 62 is stopped, the TFT 1 is turned off, and thus the data line 61 and the operating electrode 64 connected to the TFT 1 are electrically disconnected from each other.

Hence, by properly controlling turning on/off of the selection signal to the scanning lines 62 and turning on/off of the data signal to the data lines 61, it is possible to display a desired image (information) on the screen panel (on the surface of the first substrate 21, in the example shown) of the electrophoretic display.

A further active matrix driving scheme, which employs TFTs as driving devices, is disclosed in US 2002/0033792 mentioned earlier. Here a drive method which is used for an electrophoretic display is one which is also used in liquid crystal displays, and involves varying the potential of the common electrode along with the potential of the pixel electrode. This variation of potential is known by the term "common voltage swing". Specifically, the pixel electrode drive voltage is set to 0V while the voltage applied to the common electrode is set to 10V in order to increase the potential of the common electrode relative to the potential of the pixel electrode. Alternatively, the pixel electrode drive voltage is set to 10V while the common electrode drive voltage is set to 0V, in order to increase the potential of the pixel electrode relative to the potential of the common electrode. Adequately switching over the pixel electrode drive voltage and common electrode drive voltage allows the electrophoretic display to rewrite its display content.

An alternative driving scheme disclosed in US 2002/0033792 involves the application of a voltage of value 10V to the common electrode of an electrophoretic device, while either 0V or 20V is applied to the pixel electrode, thereby switching the device between two states.

To simultaneously clear all the pixels of the display initially, the pixel electrodes are simultaneously set to the low electric potential while the common electrode is set to the high electric potential, so that the display content is erased from the entire area of the display surface at once. In this case, the display surface is entirely white because the negatively charged particles move upwards within the microcapsules when attracted to the common electrode. Then, the pixel electrodes are driven respectively in response to display data while the common electrode is set to the low electric potential so that the display content is rewritten with a new one in response to the display data. Due to the aforementioned processes, it is possible to ensure rewriting of the display content without error.

As explained in this US patent application, the drive voltage (or potential difference) that is needed for changing over the display content depends upon the sizes (i.e. diameters) of the microcapsules, and is estimated to be $1\ V/\mu m$ or so. Generally, the microcapsules have prescribed diameters that range within several tens of microns, for example. In view of these prescribed microcapsule diameters, the required drive voltage is estimated at 10V or so. However, this is of the same order as the threshold voltage of the driving TFTs. Furthermore, as the development of EPDs progresses, the safe operating voltages of EPDs wiii, in some cases, be less than the threshold voltage of the organic TFTs used to drive them. This means that, if the above-described conventional driving methods are employed, there is the risk that the EPDs could be destroyed, since the minimum drive voltages delivered by the TFTs will be higher than the aforementioned safe voltages.

The present invention seeks to provide a solution to this problem. Accordingly, there is provided in a first aspect of the present invention an electro-optical arrangement, comprising: an electro-optical device capable of being selectively placed into a first display state and a second display state, the device having first and second electrodes and a predetermined safe operating voltage value, $V_{safe}$, of a voltage to be applied across the first and second electrodes; and a driver stage for providing a first electrode-drive signal to drive said first electrode and a second electrode-drive signal to drive said second electrode, the driver stage being configured such that, to drive the device into its first display state, it applies as the first electrode-drive signal a first voltage $V_1$ and as the second electrode-drive signal a second voltage $V_2$, and to drive the device into its second display state, it applies as the first electrode-drive signal a third voltage $V_3$ and as the second electrode-drive signal a fourth voltage $V_4$, wherein:

$$V_2 > V_1$$

$$V_3 > V_4$$

$$|V_1 - V_2| \leq V_{safe},$$

and

$$|V_3 - V_4| \leq V_{safe}.$$

The voltages $V_1$ and $V_3$ may advantageously be equal to each other.

The driver stage may comprise a buffer for receiving a drive signal from an external controller and for supplying this drive signal as the second electrode-drive signal to the electro-optical device.

The arrangement may comprise a two-dimensional array of the electro-optical devices, the buffer comprising a plurality of drive elements, one for each of the electro-optical devices in a row, and wherein the driver stage comprises a shift register and a latch interposed between the external controller and the buffer stage, whereby drive signals (Vdata) from the external controller for a row of the electro-optical devices can be serially loaded into the shift register, latched and passed on as the second electrode-drive signals (Vdat) to a row of electro-optical devices by way of the buffer.

The drive elements may be organic thin-film transistors.

The relationship between the first, second, third and fourth voltages may be that

$$V1 = V3 \approx \tfrac{1}{2}(V2 - V4)$$

The driver stage may be configured such that, while the latched drive signals (Vdata) are being applied to one row of the array, the drive signals (Vdata) for the next row are loaded into the shift register. This has the advantage that time is saved in achieving charging of the EPD device or devices.

The buffer may be arranged to provide a constant-current output and the driver stage may be arranged to write data signals to the electro-optical devices in a series of write operations, the intensity of coloration in selected ones of the electro-optical devices being changed successively in one or more of the write operations until the desired coloration intensity for each of the selected electro-optical devices is achieved. This measure allows a greyscale to be achieved, the number of write operations corresponding to the number of bits of the greyscale.

The successive write operations may be arranged to achieve different additional coloration intensities. These additional coloration intensities may increase or decrease in a binary series.

The second electrode-drive signal, during write operations in which there is to be no increase in coloration intensity, may assume a floating state. Alternatively, a voltage difference between the first and second electrode-drive signals, during write operations in which there is to be no increase in coloration intensity, may be less than a voltage difference between the first and second electrode-drive signals during write operations in which there is to be an increase in coloration intensity.

The electro-optical device may be an electrophoretic device.

The driver stage may be configured to apply, before the application of the first, second, third and fourth voltages, $V_1$-$V_4$, fifth and sixth voltages, $V_5$ and $V_6$, to the first and second electrodes, respectively, in order to place the electrophoretic device into its second display state, wherein $|V5-V6| \leq V_{safe}$ and the device has a second coloration corresponding to the second display state and a first coloration corresponding to the first display state.

In a second aspect of the invention there is provided a method for driving an electro-optical device capable of being selectively placed into a first display state and a second display state, the device having first and second electrodes and a predetermined safe operating voltage value, $V_{safe}$, of a voltage to be applied across the first and second electrodes, the method comprising: applying a first voltage less than the safe operating voltage across the first and second electrodes in one direction to place the device into the first display state, or applying a second voltage less than the safe operating voltage across the first and second electrodes in the opposite direction to place the device into the second display state.

The first and second display states may be first and second coloration states, respectively.

The electro-optical device may be one of a plurality of such electro-optical devices arranged in a two-dimensional array, and drive signals (Vdata) for the electrodes of a row of the electro-optical devices may be serially loaded into a shift register, latched and then passed on by way of a buffer to the row of electro-optical devices.

It is advantageous if, while the latched drive signals (Vdata) are being applied to one row of the array, the drive signals (Vdata) for the next row are loaded into the shift register.

The buffer may provide a constant current output and the driver stage may write data signals to the electro-optical devices in a series of write operations, the intensity of coloration in selected ones of the electro-optical devices being changed successively in one or more of the write operations until the desired coloration intensity for each of the selected electro-optical devices is achieved.

The successive write operations may achieve different additional coloration intensities. Furthermore, the successive write operations may achieve additional coloration intensities which increase or decrease in a binary series or linearly

The electro-optical device may be an electrophoretic device and the buffer may comprise organic thin-film transistor drivers for driving one row of the electrophoretic devices.

The buffer may apply a voltage of a first value to the second electrode to achieve the first display state or applies a voltage of a second value to the second electrode to achieve the second display state, and a voltage of a third value intermediate the first and second voltages is applied to the first electrode. The third voltage value may lie approximately midway between the first and second voltage values.

The buffer may be an organic thin-film transistor buffer comprising a plurality of thin-film transistor stages for respective electro-optical devices in a row, the thin-film transistor stages being associated with a threshold-voltage value for those stages, and wherein said second voltage value is higher than said first voltage value by said threshold-voltage value. The third voltage value may lie approximately midway between said first and second voltage values.

The first and second display states may be first and second coloration states, respectively, in which the electrophoretic device displays different colors.

Embodiments of the invention will now be described, by way of example only, with reference to the drawings, of which:

Fig. 1 is a sectional view of a known electrophoretic device;
Fig. 2 is a schematic diagram explaining the mode of operation of a known electrophoretic device;
Fig. 3 is a schematic diagram of a known direct-driving arrangement for an electro-optical device;
Fig. 4 is a sectional diagram of part of a known active-matrix electrophoretic display;
Fig. 5 is a circuit diagram of an active-matrix driving arrangement associated with the electrophoretic display of Fig. 4;
Fig. 6 is a schematic diagram of an embodiment of an electro-optical arrangement in accordance with the present invention;
Figs 7(a) and 7(b) are active-matrix driving-voltage diagrams relating to the present invention;
Fig 8 is a waveform diagram of an active-matrix driving method in accordance with a first embodiment of the present invention;
Fig. 9 is a waveform diagram similar to that of Fig. 8, but adapted for faster driving of the EPD matrix;
Fig. 10 is a greyscale version of the electro-optical arrangement according to the present invention, and
Fig. 11 is a variant of the greyscale version of the electro-optical arrangement according to the present invention shown in Fig. 10.

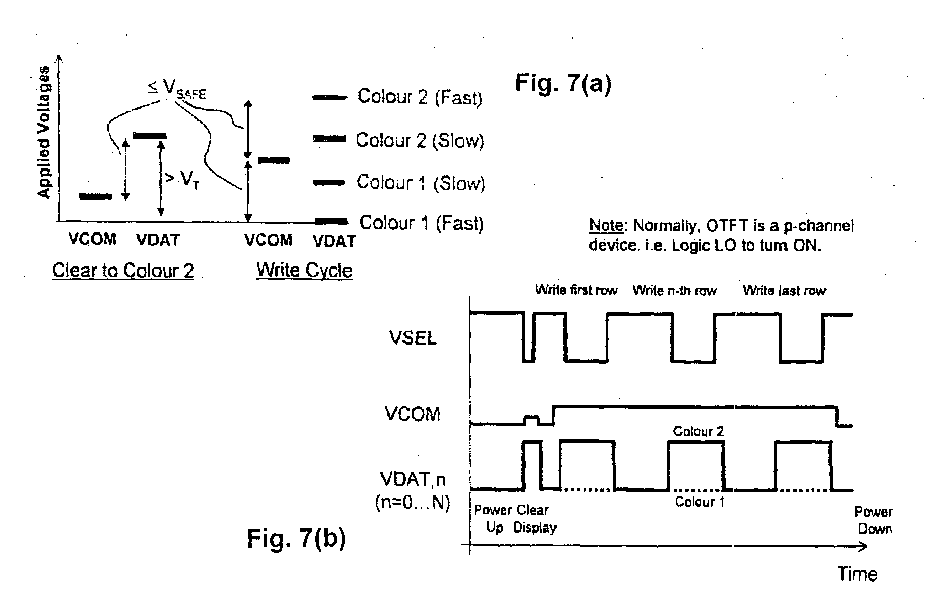

An embodiment of an electro-optical arrangement in accordance with the invention is shown in Fig. 6. In Fig. 6 the display area 50 comprises an active-matrix electrophoretic display driving scheme as shown in Fig. 5 in conjunction with Fig. 4.

The display area 50 is driven by line-select signals (Vsel) 53 provided by an external controller 54 and by data signals (Vdata) 55 likewise provided by the external controller 54. The line-select signals (Vsel) and data signals (Vdata) are fed into respective shift registers 56, 57 and the parallel output of shift register 57 is latched in a latch 58 and supplied to the TFTs 1 on lines 61 (see Fig. 5) by way of a buffer 59. Thus the data signals 55 for one line of the matrix or array are output in series by the controller 54 to the shift register 57 and are subsequently output in parallel by the shift register 57 to the buffer 59. The buffer 59 passes on the latched data signals as signals Vdat to the individual TFTs 1 and ensures that sufficient current is available to drive the pixel elements 51 and line capacitance during the writing process.

The shift register 56 receives serial scanning signals from the external controller 54 and outputs these in parallel to the display area 50 on lines 62 as signals Vsel. The electrode 23 (see Fig. 4) is supplied with a common voltage, Vcom.

Referring to Fig. 7(a), the driving-voltage levels for an EPD will be explained. Firstly, in order to clear the display to a second color (e.g. white), the common electrode is set at a voltage Vcom which is greater than or equal to 0V and the data lines EPDs of all the pixels are simultaneously taken to a voltage, Vdat, which is higher than Vcom, but with the constraint that Vdat - Vcom ≤ Vsafe. Vsafe is a safe working voltage to be applied across the EPDs and is set at a value less than or equal to the threshold voltage, $V_T$, of the buffer TFTs. Subsequent to this clearing operation, the pixels are written to in accordance with line data, Vdat, supplied from the controller 54 via the buffer 59, in which Vdat is, again, greater than Vcom for the pixels to show the second color, whereas for a first color, Vdat is made more negative than Vcom, as shown in the figure.

Furthermore, the voltage difference |Vdat - Vcom| between the common electrode and the pixels establishes whether a color change will take place relatively quickly or slowly. Two such voltage differences are shown in Fig. 7(a), namely a larger voltage difference relating to a fast color change to color 1 or to color 2, and a smaller voltage difference relating to a slower color change to color 2 or to color 1. The significance of these two speeds will become apparent in connection with a later embodiment.

The driving waveforms are shown in Fig. 7(b) as continuous waveforms over a series of rows of the display matrix. Bearing in mind that an organic TFT is normally a p-channel device requiring a negative going waveform on its gate in order to turn it on, it can be seen that, in the initial clearing phase, the row-select voltage, Vsel, goes negative from its power-up state during a time when Vdat for all the TFTs in the selected row goes HIGH. While Vdat is HIGH, Vcom is given a small positive voltage. This corresponds to the situation shown on the left-hand side of Fig. 7(a) and serves to clear all the pixels in that row to color 2, which, for example, may be white. If it is desired to clear all the pixels in the display simultaneously, the negative-going voltage Vsel will be applied to all the rows in the display at the same time. By arranging for Vdat to take a value above Vcom which is substantially equal to the safe working voltage, Vsafe, the clearing color change to white can be made to occur at its maximum rate.

Following this clearing phase, Vcom is taken higher to within the value Vsafe relative to 0V and Vdat is either taken lower than Vcom for any particular pixel in order to change the color of that pixel to color 1, or is taken higher than Vcom for that pixel in order to retain color 2 (white). Where a color change is to be effected, either of the "fast" or "slow" voltage levels for Vdat may be provided to the TFTs 1 of the active matrix. This corresponds to the situation shown on the right-hand side of Fig. 7(a) and serves to write the appropriate data into the pixels for a particular row. This process is repeated for each row in the matrix, as shown, the particular rows being selected by the application of a low voltage Vsel to the active electrophoretic matrix.

As already mentioned, the buffer 59 is preferably a TFT buffer, which includes a TFT buffer stage for each of the pixels in a row. Each of these stages serves all the pixels in a respective column of pixels. TFTs are preferred, since they have a current-supplying capability sufficient for the reliable driving of the EPDs, and/or because they have the advantage that they can be produced by processes compatible with the EPD manufacturing processes. However, a problem associated with the use of TFTs in this context is that they may have a minimum output voltage which is greater than the maximum voltage that can be tolerated across the EPDs (the EPD breakdown voltage). This is a significant factor with new-generation EPDs, which have operating voltages of the same order, and in some cases less than, the threshold voltage of typical organic TFTs. A typical organic TFT-stage minimum output voltage (which in practice may correspond to a threshold-voltage value ($V_{TH}$) of the stage) is, for example, 30V. The drive arrangement just described solves this problem by raising Vcom to, for example, midway between the Vdat values for the two display states. Thus, if Vcom is placed at about 15V, Vdat can take the values 0V or 30V for the respective display states without endangering the EPDs, since the 15V drive voltage is less than the breakdown voltage of the EPD devices concerned. In practice, the invention strives to keep the voltages across the EPD device to below a safe operating voltage (Vsafe), which is less than or equal to the breakdown voltage for that device.

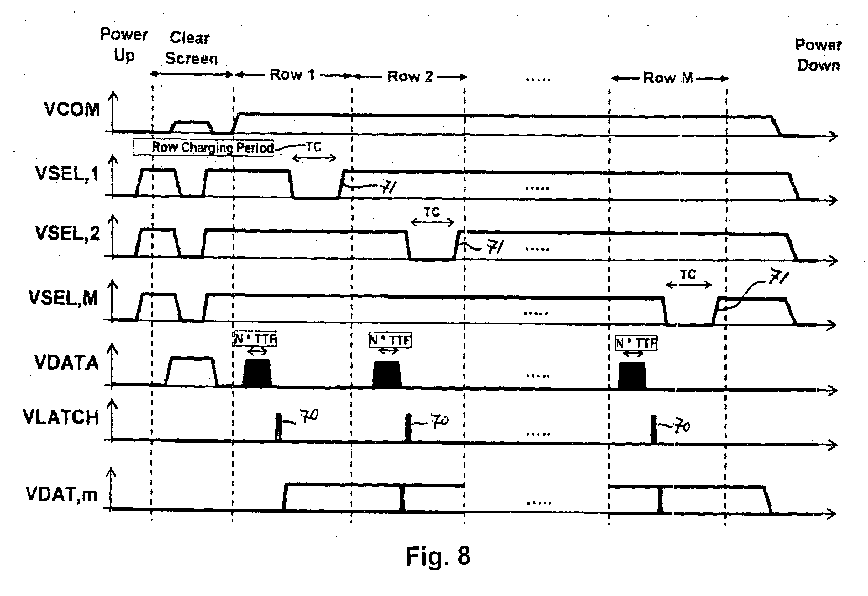

The pixel driving procedure from the point of view of the external controller is illustrated in Fig. 8. Fig. 8 shows as ordinates the common signal Vcom, the selection signals (Vsel) for M rows, the data signals Vdata, the latching signal Vlatch and the data signals Vdat local to the pixel elements. The abscissa is time.

The following steps are performed.

Firstly, the display is connected to the controller without the application of power. Secondly, power is applied in a power-up step. Thirdly, a LOW signal Vsel is applied to all the rows simultaneously with Vdata HIGH and Vcom at a value slightly above zero volts, as shown in the appropriate parts of Figs 7(a) and 7(b). By this means all the pixel elements of the display are placed into their cleared (white) state. Fourthly, the pixel elements of rows 1 to M are then written to in row order. This involves the data signals Vdata for a particular row being clocked into the shift register 57, following which these data are latched by a latching signal 70 and made available to the various TFT drivers 1 of that row as Vdat on their data lines 61. Then negative-going Vsel for that row is applied as signal 71, whereby the data signals Vdat either place the respective pixel elements into their color 1 state or maintain the existing cleared (white) state. At the end of time TC, which is the time required to fully charge the row of pixel elements, the relevant Vsel signal goes low and the pixel elements retain their current states. The latched data signals Vdat are retained while shift register 57 receives the data information Vdata for the next row of pixel elements. When all the data information has been written to the shift register, latching signal 70 is applied again to latch this new information onto the data lines 61 of the driver TFTs of this new row as new data Vdat. Then Vsel for this row goes high for time TC, and so on for all the rows in the display in sequence. Once all the rows have been written to, the display is powered down and disconnected from the controller. The display, as already mentioned earlier, then retains its display information for an extended period without the application of power.

If there are N pixel elements per row and M rows in the display, and if the time required to transfer Vdata from the external controller 54 to the shift register is TTF and, as already mentioned, the time required to charge a line of pixels fully is TC, then the total time required to write a monochrome display with all its image data is:

$$M * (N * TTF + TC)$$

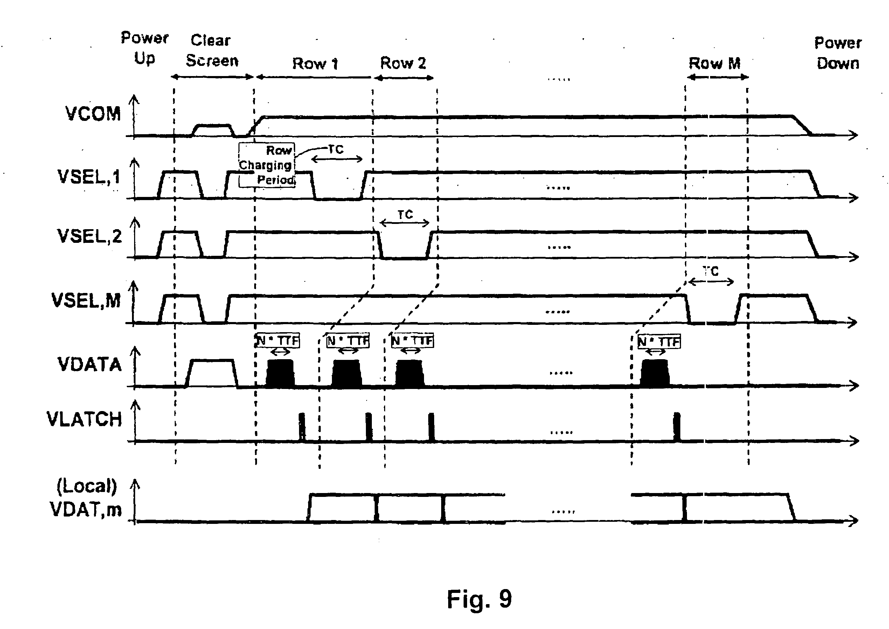

This driving scheme is simple, but it takes a long time when the display is large and when TC is also large. A quicker scheme is illustrated in Fig. 9. The difference between this scheme and that of Fig. 8 is that the data Vdata for a row are loaded into the shift register 57 during time TC - that is, while the previous row's data are being assimilated by the display. This effectively saves time N*TTF for each row of the display. For this scheme to be practicable, the following relationship must obtain between the charging time TC and the row data transfer time N*TTF:

$$TC \geq N*TTF.$$

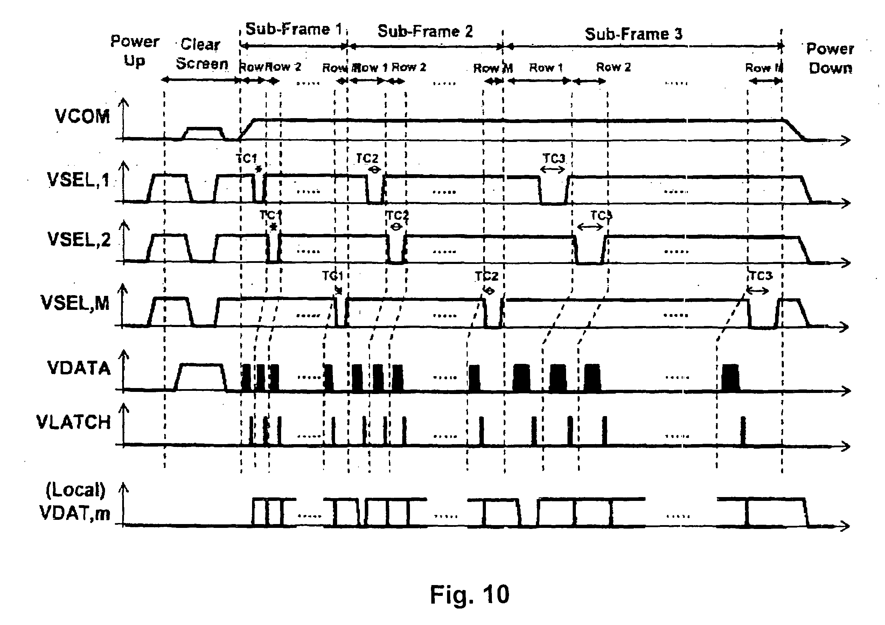

The invention also envisages the use of greyscale control in an ECD display. Fig. 10 shows a scheme for achieving this, in which the total time for charging the pixels of the display is divided into three "write" periods. These "write" periods are called "subframes" in Fig. 10, in contrast to the "frames" which normally make up a moving image. It is possible for an EPD to display moving images consisting of a series of frames. For each of those frames there will be a number of periods ("write" periods) over which the EPDs will be charged up during the writing process, and these periods therefore constitute "subframes". However, it is understood that, where a still image only is to be displayed, the greyscale "subframes" will be part of a single "frame".

Loading of the shift register 57 with data Vdata and latching of these data are carried out for each row of the display as already explained in connection with Figs 8 and 9. In the case of the first subframe, the length of time during which the pixel elements of each row are charged with the respective row data is TC1. In the second subframe loading of the shift register 57 and latching by the latch 58 take place again, but this time the charging time for the latched data Vdat is TC2, which is greater than TC1. Finally, the process is repeated for a charging time TC3 greater than TC2. There is thus created a three-bit greyscale.

In the general case, where there are M subframes, the charging-time weighting of the various subframes may, in one form, be expressed as:

$$TCn = R(n) * TC_0$$

where n=0, 1, 2...M-1, R(n) is a correction function and $TC_0$ is a minimum charging period, which will normally apply to the first subframe. In a preferred embodiment $R(n)=2^n$; that is, the various charging periods TC1, TC2, TC3, etc, follow a binary sequence, so that TC2 = 2*TC1, TC3 = 2*TC2, and so on. This has the advantage of least complexity for the controller design. Other weighting arrangements are possible, however. For example, for a linear weighting the charging times may be expressed as:

$$TCn = (nk+1) TC_0$$

where k is a constant, n = 0, 1, 2...M-1.

The above-described frame-based scheme is not related to the display of a moving image, which might normally be implied by the use of the term "frame". In the present case the image for all of the frames is the same. All that is being changed in each frame is the amount of charge allowed into the individual pixel elements of each row. Thus the image is a still image, which is assumed to be the case in the previous embodiments of the invention as well.

To refine the resolution of the greyscale, it would be necessary to include a greater number of subframes than just three.

To achieve the correct greyscale data for each pixel in a row, the external controller 54 is arranged to output the appropriate data signals for either clear (color 2) or color 1 for appropriate ones of the subframes in accordance with the binary value required. As an example, Table 1 below lists the data output for a row of ten pixel elements over the three subframes for a greyscale display of 2, 4, 1, 0, 5, 7, 7, 6, 3, 0 (out of a scale of from 0 to 7) over that row.

Table 1

| Frame | Vdata for Pixels 0-9 (C = color 1, 0 = color 2 (clear), F = float) | | | | | | | | | |
|---|---|---|---|---|---|---|---|---|---|---|
| | 0 | 1 | 2 | 3 | 4 | 5 | 6 | 7 | 8 | 9 |
| 1 ($2^0$) | 0 | 0 | C | 0 | C | C | C | 0 | C | 0 |
| 2 ($2^1$) | C | 0 | F | 0 | F | C | C | C | C | 0 |
| 3 ($2^2$) | F | C | F | 0 | C | C | C | C | F | 0 |

Vdata takes the appropriate voltage values for "color 1" or "clear (color 2)", or allows Vdat to float so that the state for the previous subframe is not disturbed.

An alternative way of achieving greyscale drive is to apply a reduced voltage Vdat to the EPD devices relative to Vcom during non-active subframes, this reduced voltage avoiding the need for a separate "floating" drive state. This situation is shown as the "slow" Vdat level in Fig. 7(a), which was described earlier. Strictly speaking, this approach means that, when the color change process should be suspended during the inactive subframes, it will actually be continuing in the same direction, but at a much slower rate. Depending on the rate, this continued change may be small enough to be negligible.

This alternative greyscale drive scenario is set out in Table 2 below.

Table 2

| Frame | Vdata for Pixels 0-9 ($C_H$ = color 1 (high), $C_L$ = color 1 (low), 0 = color 2) | | | | | | | | | |
|---|---|---|---|---|---|---|---|---|---|---|
| | 0 | 1 | 2 | 3 | 4 | 5 | 6 | 7 | 8 | 9 |
| 1 ($2^0$) | 0 | 0 | $C_H$ | 0 | $C_H$ | $C_H$ | $C_H$ | 0 | $C_H$ | 0 |
| 2 ($2^1$) | $C_H$ | 0 | $C_L$ | 0 | $C_L$ | $C_H$ | $C_H$ | $C_H$ | $C_H$ | 0 |
| 3 ($2^2$) | $C_L$ | $C_H$ | $C_L$ | 0 | $C_H$ | $C_H$ | $C_H$ | $C_H$ | $C_L$ | 0 |

One possible drawback of this alternative greyscale drive scheme is that it is necessary for the buffer to have any of three drive states: clear (color 2), color 1 high ("$C_H$") and color I low ("$C_L$"). In a further variant scheme the clear state ("0") is replaced by color 1 low ("$C_L$"). This has the advantage of reducing the complexity of the buffer design to just two states instead of three. This scheme is set out below as Table 3.

Table 3

| Frame | Vdata for Pixels 0-9 ($C_H$ = color 1 (high), $C_L$ = color 1 (low)) | | | | | | | | | |
|---|---|---|---|---|---|---|---|---|---|---|
| | 0 | 1 | 2 | 3 | 4 | 5 | 6 | 7 | 8 | 9 |
| 1 ($2^0$) | $C_L$ | $C_L$ | $C_H$ | $C_L$ | $C_H$ | $C_H$ | $C_H$ | $C_L$ | $C_H$ | $C_L$ |
| 2 ($2^1$) | $C_H$ | $C_L$ | $C_L$ | $C_L$ | $C_L$ | $C_H$ | $C_H$ | $C_H$ | $C_H$ | $C_L$ |
| 3 ($2^2$) | $C_L$ | $C_H$ | $C_L$ | $C_L$ | $C_H$ | $C_H$ | $C_H$ | $C_H$ | $C_L$ | $C_L$ |

It is assumed with all three versions of the greyscale driving scheme just described that the display will be cleared initially by the application of all HIGHs as the drive signal Vdat.

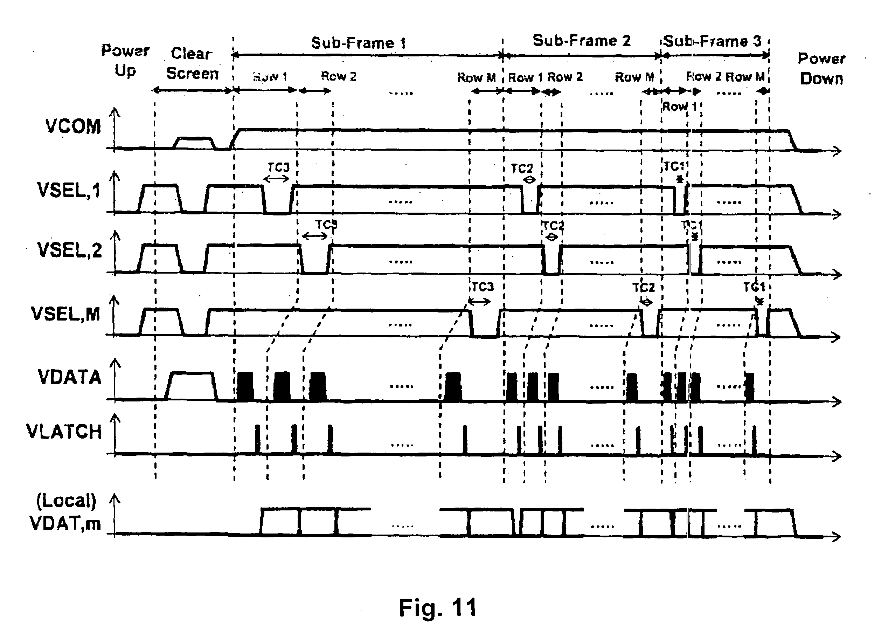

Fig. 10 shows the charging times, TC, for the various frames increasing sequentially for each successive subframe. An alternative scheme is illustrated in Fig. 11, in which the first subframe is associated with the longest charging time and the last subframe with the shortest, the intervening subframes again lying successively between these limits.

To implement the greyscale scheme, it is preferred, but is not essential, to realize the buffer 59 as a constant-current source with its output voltage limited to prevent the ECD from exceeding its Vmax limit. In this case controlling the length of time during which this current is being applied to the various pixel elements governs the amount of charge introduced into these elements in a linear fashion.

Although the invention has been described in connection with an active-matrix EPD display, it can also be implemented in a direct-driving or passive-matrix type EPD display. Indeed, the invention is not limited to EPDs, but is applicable to other technologies in which the devices used have a maximum safe working voltage and the drivers employed to drive these devices have a minimum practical driving voltage level which is higher than this safe working voltage.

Where an active matrix drive is used, this is not limited to a TFT-type drive, but may instead be based on CMOS devices, for example. This depends, however, on the magnitude of the drive voltages required to drive the particular EPDs being used.

Although the waveforms shown in Figs 7-11 assumed the use of p-channel organic TFTs for the buffer stage 59 (see Fig. 6), it will be appreciated that n-channel devices may be used instead. In this case the driving voltages will be of the opposite sense (e.g. Vsel will be positive-going in order to select a particular row of pixels). Alternatively, a negative-going driving voltage may be used in order to obtain a "reverse video" effect.

**Claims**

1. An electro-optical arrangement, comprising:

    an electro-optical device capable of being selectively placed into a first display state and a second display state, the device having first and second electrodes and a predetermined safe operating voltage value, $V_{safe}$, of a voltage to be applied across the first and second electrodes; and
    a driver stage for providing a first electrode-drive signal to drive said first electrode and a second electrode-drive signal to drive said second electrode, the driver stage being configured such that, to drive the device into its first display state, it applies as the first electrode-drive signal a first voltage $V_1$ and as the second electrode-drive signal a second voltage $V_2$, and to drive the device into its second display state, it applies as the first electrode-drive signal a third voltage $V_3$ and as the second electrode-drive signal a fourth voltage $V_4$, wherein:

$$V_2 > V_1$$

$$V_3 > V_4$$

$$|V_1 - V_2| \leq V_{safe},$$

    and

$$|V_3 - V_4| \leq V_{safe}.$$

2. Arrangement as claimed in claim 1, wherein $V_1 = V_3$.

3. Arrangement as claimed in claim 1 or claim 2, wherein the driver stage comprises a buffer for receiving a drive signal from an external controller and for supplying this drive signal as the second electrode-drive signal to the electro-optical device.

4. Arrangement as claimed in claim 3, comprising a two-dimensional array of the electro-optical devices, the buffer comprising a plurality of drive elements, one for each of the electro-optical devices in a row, and wherein the driver stage comprises a shift register and a latch interposed between the external controller and the buffer stage, whereby drive signals (Vdata) from the external controller for a row of the electro-optical devices can be serially loaded into the shift register, latched and passed on as the second electrode-drive signals (Vdat) to a row of electro-optical devices by way of the buffer.

5. Arrangement as claimed in claim 4, wherein the drive elements are organic thin-film transistors.

6. Arrangement as claimed in claim 5, wherein:

$$V1 = V3 \approx \tfrac{1}{2}\,(V2 - V4)$$

7. Arrangement as claimed in any one of claims 4 to 6, wherein the driver stage is configured such that, while the latched drive signals (Vdata) are being applied to one row of the array, the drive signals (Vdata) for the next row are loaded into the shift register.

8. Arrangement as claimed in claim 6 or claim 7, wherein the buffer is arranged to provide a constant-current output and the driver stage is arranged to write data signals to the electro-optical devices in a series of write operations, the intensity of coloration in selected ones of the electro-optical devices being changed successively in one or more of the write operations until the desired coloration intensity for each of the selected electro-optical devices is achieved.

9. Arrangement as claimed in claim 8, wherein the successive write operations are arranged to achieve different additional coloration intensities.

10. Arrangement as claimed in claim 9, wherein the successive write operations are arranged to achieve additional coloration intensities which increase or decrease in a binary series.

11. Arrangement as claimed in any one of claims 8 to 10, wherein the second electrode-drive signal, during write operations in which there is to be no increase in coloration intensity, assumes a floating state.

12. Arrangement as claimed in any one of claims 8 to 10, wherein a voltage difference between the first and second electrode-drive signals, during write operations in which there is to be no increase in coloration intensity, is less than a voltage difference between the first and second electrode-drive signals during write operations in which there is to be an increase in coloration intensity.

13. Arrangement as claimed in any one of claims 6 to 12, wherein the electro-optical device is an electrophoretic device.

14. Arrangement as claimed in claim 13, wherein the driver stage is configured to apply, before the application of the first, second, third and fourth voltages, $V_1$-$V_4$, fifth and sixth voltages, $V_5$ and $V_6$, to the first and second electrodes, respectively, in order to place the electrophoretic device into its second display state, wherein $|V5-V6| \leq V_{safe}$ and the device has a second coloration corresponding to the second display state and a first coloration corresponding to the first display state.

15. Method for driving an electro-optical device capable of being selectively placed into a first display state and a second display state, the device having first and second electrodes and a predetermined safe operating voltage value, $V_{safe}$, of a voltage to be applied across the first and second electrodes, the method comprising:

applying a first voltage less than the safe operating voltage across the first and second electrodes in one direction to place the device into the first display state, or applying a second voltage less than the safe operating voltage across the first and second electrodes in the opposite direction to place the device into the second display state.

16. Method according to claim 15, wherein the first and second display states are first and second coloration states, respectively.

17. Method according to claim 15 or claim 16, wherein the electro-optical device is one of a plurality of such electro-optical devices arranged in a two-dimensional array, and drive signals (Vdata) for the electrodes of a row of the electro-optical devices are serially loaded into a shift register, latched and then passed on by way of a buffer to the row of electro-optical devices.

18. Method according to claim 17, wherein, while the latched drive signals (Vdata) are being applied to one row of the array, the drive signals (Vdata) for the next row are loaded into the shift register.

19. Method according to claim 17 or claim 18, wherein the buffer provides a constant current output and the driver stage writes data signals to the electro-optical devices in a series of write operations, the intensity of coloration in selected ones of the electro-optical devices being changed successively in one or more of the write operations until the desired coloration intensity for each of the selected electro-optical devices is achieved.

20. Method as claimed in claim 19, wherein the successive write operations achieve different additional coloration intensities.

21. Method as claimed in claim 20, wherein the successive write operations achieve additional coloration intensities which increase or decrease in a binary series.

22. Method as claimed in claim 20, wherein the successive write operations achieve additional coloration intensities which increase or decrease linearly.

23. Method as claimed in any one of claims 17 to 22, wherein the electro-optical device is an electrophoretic device and the buffer comprises organic thin-film transistor drivers for driving one row of the electrophoretic devices.

24. Method as claimed in claim 23, wherein the buffer applies a voltage (Vdat) of a first value to the second electrode to achieve the first display state or applies a voltage (Vdat) of a second value to the second electrode to achieve the second display state, and a voltage of a third value intermediate the first and second voltages is applied to the first electrode.

25. Method as claimed in claim 24, wherein the third voltage value lies approximately midway between the first and second voltage values.

26. Method as claimed in claim 25, wherein the buffer is an organic thin-film transistor buffer comprising a plurality of organic thin-film transistor stages for respective electro-optical devices in a row, the organic thin-film transistor stages being associated with a threshold-voltage value for those stages, and wherein said second voltage value is higher than said first voltage value by said threshold-voltage value and said third voltage value is approximately midway between said first and second voltage values.

27. Method as claimed in claim 15, wherein the first and second display states are first and second coloration states, respectively, in which the electrophoretic device displays different colors.

28. An electro-optical arrangement substantially as shown in, or as hereinbefore described with reference to, Fig. 6 of the drawings.

29. A method for driving an electro-optical device substantially as hereinbefore described with reference to Fig 7, 8, 9, 10 or 11 of the drawings.

**Fig. 1**

**Fig. 2(a)**

**Fig. 2(b)**

**Fig. 2(c)**

## Fig. 3

Bottom Panel (Common Electrode)

Top panel
(Top Electrodes)

10

14

isolating switches

Simplified
Controller

12

## Fig. 4

25a  25b  40  20

21

23

24

22

64  64  64

60

## Fig. 6

VCOM

54

53  56

50

External Controller

Shift
Reg'tr

Display Area

$V_{SEL}$

59

Buffer

$V_{LATCH}$

Latch

58

$V_{DATA}$

Shift Register

55

57

**Fig. 5**

Fig. 7(a)

Clear to Colour 2 — Write Cycle

Colour 2 (Fast)
Colour 2 (Slow)
Colour 1 (Slow)
Colour 1 (Fast)

Note: Normally, OTFT is a p-channel device. i.e. Logic LO to turn ON.

Fig. 7(b)

Fig. 8

Fig. 9

EP 1 742 194 A1

Fig. 10

Fig. 11

**European Patent Office**

**EUROPEAN SEARCH REPORT**

Application Number

EP 05 25 4196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/020201 A (KONINKLIJKE PHILIPS ELECTRONICS N.V; JOHNSON, MARK, T; ZHOU, GUOFU; AI) 3 March 2005 (2005-03-03) <br> * page 2, line 15 - line 18 * <br> * page 2, line 33 - line 34 * <br> * page 5, line 1 - line 2 * <br> * page 6, line 25 - line 26 * <br> * page 7, line 1 - line 6 * <br> * page 7, line 27 - line 29 * <br> * page 8, line 16 - line 28 * <br> * page 8, line 1 - line 2 * <br> * page 13, line 9 - page 15, line 4 * <br> * page 16, line 5 - line 8 * <br> * figures 1,2,4,5A,11 * <br> ----- | 1-29 | G09G3/34 |
| X | US 2004/212870 A1 (KATASE MAKOTO) 28 October 2004 (2004-10-28) <br> * paragraphs [0066], [0068], [0079], [0081], [0089], [0097]; figures 2,3,5,6 * <br> ----- | 1-29 | |
| X | US 2002/105600 A1 (SHIMODA TATSUYA ET AL) 8 August 2002 (2002-08-08) <br> * paragraph [0016] - paragraph [0018] * <br> * figure 1 * <br> ----- | 1-29 | TECHNICAL FIELDS SEARCHED (IPC) <br><br> G09G |
| X | WO 2004/036537 A (KONINKLIJKE PHILIPS ELECTRONICS N.V; JOHNSON, MARK, T) 29 April 2004 (2004-04-29) <br> * page 4, line 11 - line 12 * <br> * page 4, line 28 - line 29 * <br> * figure 1 * <br> ----- | 1-29 | |

The present search report has been drawn up for all claims

| Place of search | Date of completion of the search | Examiner |
|---|---|---|
| The Hague | 5 December 2005 | Fanning, C |

EPO FORM 1503 03.82 (P04C01)

**ANNEX TO THE EUROPEAN SEARCH REPORT
ON EUROPEAN PATENT APPLICATION NO.**

EP 05 25 4196

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2005

| Patent document cited in search report | | Publication date | Patent family member(s) | | Publication date |
|---|---|---|---|---|---|
| WO 2005020201 | A | 03-03-2005 | NONE | | |
| US 2004212870 | A1 | 28-10-2004 | NONE | | |
| US 2002105600 | A1 | 08-08-2002 | JP 2002169190 A | | 14-06-2002 |
| WO 2004036537 | A | 29-04-2004 | AU 2003260855 A1 | | 04-05-2004 |
| | | | CN 1689066 A | | 26-10-2005 |

EPO FORM P0459

For more details about this annex : see Official Journal of the European Patent Office, No. 12/82

**REFERENCES CITED IN THE DESCRIPTION**

**Patent documents cited in the description**

- JP 900963 A
- US 2002003372 A
- US 20020033792 A
- US 20050029514 A

**Non-patent literature cited in the description**

- *International Electron Device Meeting Technical Digest,* 2000, 623-626
- **T. BERT et al.** 14-1: Passive Matrix Addressing of Electrophoretic Image Display. *Eurodisplay,* 2002, 251-254